# EUROPEAN PATENT SPECIFICATION

(11) **EP 4 633 106 B1**
(45) Date of publication and mention of the grant of the patent: **18.11.2026**
(21) Application number: 25167164.0
(22) Date of filing: 28.03.2025
(51) Int. Cl.: H04L 43/0805, H04L 41/0893

(54) **BLOCKING LOGICAL PORT STATE TRANSITION TO ACTIVE**
BLOCKIERUNG DES ZUSTANDSÜBERGANGS EINES LOGISCHEN PORTS ZU AKTIV
BLOCAGE DE TRANSITION D'ÉTAT DE PORT LOGIQUE À ACTIF

(30) Priority: 09.04.2024 US 202463631626 P; 13.02.2025 US 202519052830
(43) Date of publication of application: 15.10.2025
(73) Proprietor: Hewlett Packard Enterprise Development LP, Spring, Texas 77389 (US)
(72) Inventor: HU, Hanzhong, Sunnyvale, 94089 (US); RADULESCU-BANU, Cristina, Sunnyvale, 94089 (US); ZIEGLER, John E., Sunnyvale, 94089 (US)
(74) Representative: Marks & Clerk LLP

(56) References cited:
- EP-A1- 4 221 098
- EP-A1- 4 412 162
- CN-A- 118 449 839

## Description

### CROSS-REFERENCE TO RELATED APPLICATION

This Patent Application claims priority to U.S. Provisional Patent Application No. 63/631,626, filed on April 9, 2024, and entitled "BLOCKING LOGICAL PORT STATE TRANSITION TO ACTIVE."

### BACKGROUND

A subscriber group (SGRP) may include a subscriber and/or one or more other subscribers that share, with the subscriber, similar or the same network traffic characteristics, service level agreements (SLAs), or the like. An SGRP can be associated with a logical port of a user plane subscriber access device. For example, packets can be transmitted to or from subscribers of the SGRP via the logical port. EP 4221098 A1 discloses an integrated broadband network gateway (BNG) device that communicates management information with a particular distributed BNG user plane device.

### SUMMARY

Particular embodiments are set out in the independent claims. Various optional examples are set out in the dependent claims. Some implementations described herein relate to a method. The method may include receiving, by a network device, an indication that a user plane subscriber access device has rebooted. The method may include transmitting, by the network device and to a first subscriber access network device, based on the indication that the user plane subscriber access device has rebooted, an indication to refrain from notifying an access network that a logical port corresponding to a subscriber group created in a track-logical-port (TLP) mode is associated with an active state.

Some implementations described herein relate to a broadband network gateway control plane (BNG-CP) device. The BNG-CP device may include one or more memories and one or more processors. The one or more processors may be to receive an indication that a user plane subscriber access device has rebooted. The one or more processors may be to transmit to a first subscriber access network device, based on the indication that the user plane subscriber access device has rebooted, an indication to refrain from notifying an access network that a logical port corresponding to a subscriber group created in a TLP mode is associated with an active state.

Some implementations described herein relate to a non-transitory computer-readable medium that stores a set of instructions. The set of instructions, when executed by one or more processors of a network device, may cause the network device to receive an indication that a user plane subscriber access device has rebooted. The set of instructions, when executed by one or more processors of the network device, may cause the network device to transmit to a first subscriber access network device, based on the indication that the user plane subscriber access device has rebooted, a keep-down flag that indicates to refrain from notifying an access network that a logical port corresponding to a subscriber group created in a TLP mode is associated with an active state.

### BRIEF DESCRIPTION OF THE DRAWINGS

Fig. 1 is a diagram of an example implementation associated with refraining from a logical port active state notification.
Fig. 2 is a diagram of an example implementation associated with a sequence for refraining from a logical port active state notification.
Fig. 3 is a diagram of an example environment in which systems and/or methods described herein may be implemented.
Fig. 4 is a diagram of example components of a device associated with refraining from logical port active state notification.
Fig. 5 is a diagram of example components of a device associated with refraining from logical port active state notification.
Fig. 6 is a flowchart of an example process associated with refraining from a logical port active state notification.

### DETAILED DESCRIPTION

The following detailed description of example implementations refers to the accompanying drawings. The same reference numbers in different drawings may identify the same or similar elements.

A broadband network gateway (BNG) routes traffic to and from broadband remote access devices, such as digital subscriber line access multiplexers (DSLAMs), on an Internet service provider (ISP) network. The BNG enables subscribers to connect to the broadband network, and performs authentication, authorization, and accounting; assigns Internet protocol (IP) addresses; and enforces quality of service (QoS) policies, among other examples.

To accommodate growths in a quantity of subscribers, a quantity and types of services being provided by BNGs, and an amount of traffic being processed by the BNGs, a disaggregated BNG (DBNG) may be deployed by a network operator. The DBNG physically and logically provides control and user plane separation (CUPS). For example, software to perform control plane functions may be distributed for execution by a BNG-CP device. One or more BNG user plane (BNG-UP) devices may remain in a forwarding path between subscriber devices and a network to process traffic (e.g., packet flows) between the subscriber devices and the network.

A BNG-UP device may have one or more access-facing logical ports (e.g., logical ports that face the access network) assigned to one or more SGRPs. For example, an access network protocol enabling communication between the access network and the BNG-UP device may run on the logical port(s). In some cases, an SGRP may be created in a TLP mode on a first (active) BNG-UP device. The TLP mode may allow the first BNG-UP device to detect a failure associated with the logical port and disable the logical port, which may cause a switchover that allows the SGRP to be serviced by a second (backup) BNG-UP device (e.g., via a logical port of the second BNG-UP device).

In some cases, the first BNG-UP device may reboot and indicate, to the access network, that the logical port of the SGRP at the first BNG-UP device is (or can become) active. This indication may prompt the access network to resume sending SGRP traffic to the logical port of the first BNG-UP device. However, the logical port can begin receiving the SGRP traffic before the BNG-CP device has finished programming all of the subscribers in the SGRP for the logical port. Programming a subscriber may involve providing routing information associated with that subscriber to the first BNG-UP device; thus, before a subscriber has been programmed, the first BNG-UP device may be unable to handle traffic for that subscriber. As a result, the first BNG-UP device may lose (e.g., drop) subscriber traffic, leading to significant traffic blackholing.

Some implementations described herein enable the BNG-CP device to hold down the logical port such that the logical port does not become active until all subscribers in the SGRP have been programmed on the logical port. For example, the BNG-CP device may block a transition of a logical port state to active. In some examples, the BNG-CP device may indicate, to the first BNG-UP device, that the first BNG-UP device is to wait to notify the access network that the logical port is active. Therefore, the access network may refrain from sending subscriber traffic to the first BNG-UP device until the BNG-CP device has finished programming all of the subscribers for the logical port. For example, after programming all of the subscribers, the BNG-CP device may transmit an indication to notify the access network that the logical port is active.

As a result, the first BNG-UP device may avoid blackholing of subscriber traffic. For example, the first BNG-UP device may receive subscriber traffic after the BNG-CP device has finished programming all of the subscribers for the logical port. Therefore, the first BNG-UP device may be able to appropriately handle (e.g., rather than drop) the subscriber traffic.

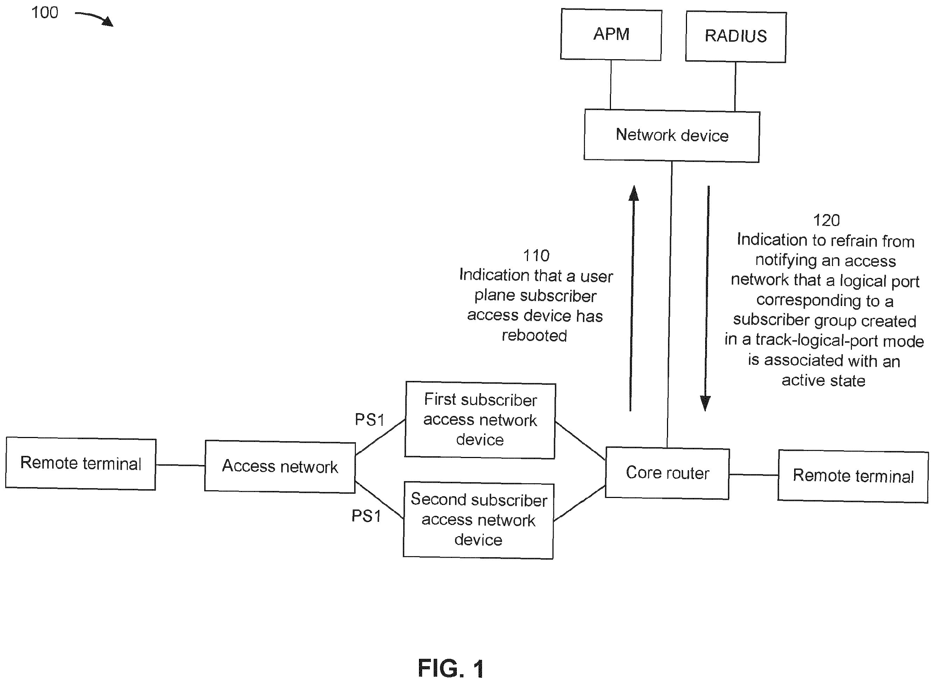

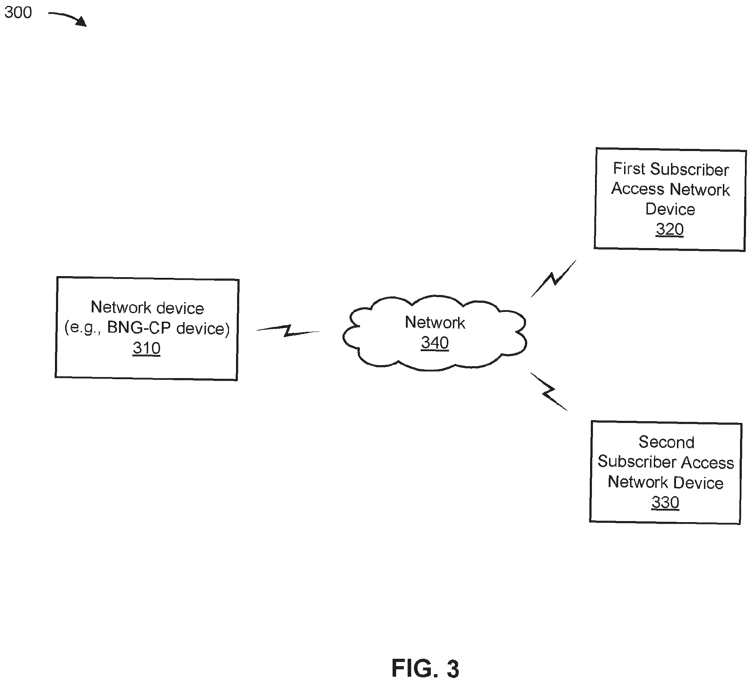

Fig. 1 is a diagram of an example implementation 100 associated with refraining from a logical port active state notification. As shown in Fig. 1, example implementation 100 includes a remote terminal (e.g., a subscriber device, a residential gateway (RG), customer premises equipment (CPE), a user equipment (UE), and/or the like), an access network (e.g., a layer 2 (L2) access network or the like), a first subscriber access network device (e.g., a first BNG-UP device), a second subscriber access network device (e.g., a second BNG-UP device), a core router, another remote terminal, a network device (e.g., a BNG-CP device), an access policy manager (APM), and a remote authentication dial-in user service (RADIUS) server. These devices are described in more detail below in connection with Figs. 3-5.

Table 1 below shows the mapping of the first BNG-UP device ("UP1") and the second BNG-UP device ("UP2") to an SGRP *A*. Interface 1 corresponds to a logical port on the first BNG-UP device, and interface 2 corresponds to a logical port on the second BNG-UP device. The access network may transmit network traffic belonging to SGRP *A* to the logical port on the first BNG-UP device and/or to the logical port on the second BNG-UP device over pseudowire 1 ("PS1").

**Table 1**

| SGRP | Interface 1 | Interface 2 |
|---|---|---|
| SGRP *A* | UP1:PS1 | UP2:PS1 |

In some examples, the PS1 between the access network and the logical port on the first BNG-UP device may be a preferred active link. The PS1 between the access network and the logical port may be the preferred active link in that, when both BNG-UP devices are functioning, the first BNG-UP device may be configured as an active BNG-UP device for SGRP *A*, and the second BNG-UP device may be configured as a backup BNG-UP device for SGRP *A*.

In some examples, the SGRP *A* may be created in a TLP mode on the first BNG-UP device. In some examples, the first BNG-UP device may detect a failure associated with the logical port. For example, the first BNG-UP device may experience a failure (e.g., a hardware or software failure) and disable the logical port. As a result, a switchover may occur whereby the second BNG-UP device transitions from a backup BNG-UP device for SGRP *A* to an active BNG-UP device for SGRP *A*.

As shown by reference number 110, the first BNG-UP device may transmit, and the BNG-CP device may receive, an indication that the first BNG-UP device has rebooted. For example, the first BNG-UP device may have rebooted after the software or hardware failure was resolved (e.g., automatically or manually). In some examples, the indication that the first BNG-UP device has rebooted may be a packet forwarding control protocol (PFCP) association setup request. As shown, the first BNG-UP device may transmit, and the BNG-CP device may receive, the indication via one or more intermediate network nodes, such as the core router.

As shown by reference number 120, the BNG-CP device may transmit, and the first BNG-UP device may receive, based on (e.g., in response to) the indication that the first BNG-UP device has rebooted, an indication to refrain from notifying the access network that a logical port corresponding to SGRP *A*, created in TLP mode, is associated with an active state. The logical port may be the same logical port on the first BNG-UP device before the switchover or a different logical port. The active state may be a state of the active BNG-UP device for SGRP *A*. For example, a logical port may be associated with an active state in that the BNG-UP device hosting the logical port may be in the active state for an SGRP. The logical port may correspond to SGRP *A* created in TLP mode in that the logical port may transmit or receive subscriber traffic belonging to SGRP *A* at least when the first BNG-UP device is configured as an active BNG-UP device for SGRP *A*. As shown, the first BNG-UP device may transmit, and the BNG-CP device may receive, the indication via one or more intermediate network nodes, such as the core router.

The first BNG-UP device may refrain from notifying the access network that the logical port is associated with the active state until receiving a notification, from the BNG-CP device, to notify the access network that the logical port is associated with the active state. In some examples, the BNG-CP device may transmit, and the first BNG-UP device may receive, the indication to notify the access network that the logical port is associated with the active state after the BNG-CP device has programmed all subscribers on the logical port. Thus, the first BNG-UP device may notify the access network that the logical port is associated with the active state, and the access network may transmit subscriber traffic to the first BNG-UP device, after all subscribers have been programmed on the logical port.

Transmitting the indication to refrain from notifying an access network that the logical port corresponding to the SGRP created in track-logical-port mode is associated with the active state may enable the first BNG-UP device to avoid blackholing of subscriber traffic. For example, because the first BNG-UP device may receive subscriber traffic after the BNG-CP device has finished programming all of the subscribers for the logical port, the first BNG-UP device may be able to appropriately handle (e.g., rather than drop) the subscriber traffic.

As indicated above, Fig. 1 is provided as an example. Other examples may differ from what is described with regard to Fig. 1. The number and arrangement of devices shown in Fig. 1 are provided as an example. In practice, there may be additional devices, fewer devices, different devices, or differently arranged devices than those shown in Fig. 1. Furthermore, two or more devices shown in Fig. 1 may be implemented within a single device, or a single device shown in Fig. 1 may be implemented as multiple, distributed devices. Additionally, or alternatively, a set of devices (e.g., one or more devices) shown in Fig. 1 may perform one or more functions described as being performed by another set of devices shown in Fig. 1.

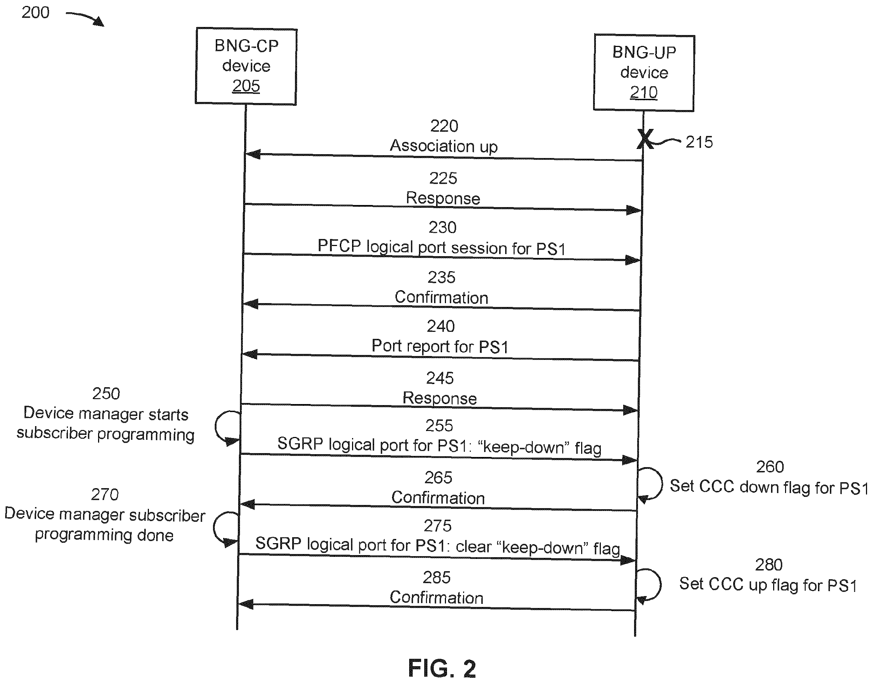

Fig. 2 is a diagram of an example implementation 200 associated with a sequence for refraining from a logical port active state notification. As shown, a BNG-CP device 205 and a BNG-UP device 210 may communicate with each other. The BNG-CP device 205 may be the BNG-CP device from Fig. 1, and the BNG-UP device 210 may be the first BNG-UP device from Fig. 1.

As shown by reference number 215, the BNG-UP device 210 may experience a failure (e.g., a software or hardware failure), which may prompt a switchover of an SGRP (e.g., SGRP *A*) to another BNG-UP device (e.g., the second BNG-UP device of Fig. 1). After experiencing the failure, the BNG-UP device 210 may reboot (e.g., resume functionality).

As shown by reference number 220, the BNG-UP device 210 may transmit, and the BNG-CP device 205 may receive, an indication that the BNG-UP device 210 has rebooted. In some examples, the indication that the BNG-UP device 210 has rebooted may be an indication that an association between the BNG-CP device 205 and the BNG-UP device 210 is up (or available to come up). For example, the indication may be a PFCP association setup request.

As shown by reference number 225, the BNG-CP device 205 may transmit, and the BNG-UP device 210 may receive, a response to the indication that the BNG-UP device 210 has rebooted. For example, the response to the indication that the BNG-UP device 210 has rebooted may be a PFCP association setup response.

As shown by reference number 230, the BNG-CP device 205 may program, on the BNG-UP device 210, a PFCP logical port session for a link between the access network and the BNG-UP device 210 (e.g., PS1). For example, the BNG-UP device 210 may create a logical port corresponding to the SGRP *A* in TLP mode. As shown by reference number 235, the BNG-UP device 210 may transmit, and the BNG-CP device 205 may receive, a confirmation that the programming of the PFCP logical port session was successful.

In some aspects, as shown by reference number 240, the BNG-UP device 210 may transmit, and the BNG-CP device 205 may receive, an indication that a link (e.g., PS1) between the access network and the logical port is a preferred active link. In some examples, the BNG-UP device 210 may generate and transmit, and the BNG-CP device 205 may receive, a port report (e.g., a PFCP report) containing the indication that the link between the access network and the logical port is a preferred active link. For example, the port report may contain information regarding the logical port corresponding to PS1 (e.g., the port report may contain a PFCP vendor information element (IE) setting the logical port for PS1 to a preferred active status). As shown by reference number 245, the BNG-CP device 205 may transmit, and the BNG-UP device 210 may receive, a response to the indication that the link between the access network and the logical port is a preferred active link (e.g., a PFCP report response).

As shown by reference number 250, a device manager (e.g., an SGRP application) on the BNG-CP device 205 may start subscriber programming (e.g., subscription programming). For example, the device manager may start the subscriber programming in response to receiving a *port-add* indication corresponding to the logical port. For example, the device manager may begin to program subscribers for SGRP *A*. SGRP *A* may contain any suitable quantity of subscribers, such as on the order of 10,000 subscribers.

In some aspects, as shown by reference number 255, the BNG-CP device 205 may transmit, and the BNG-UP device 210 may receive, programming information associated with the subscriber group. The programming information may be associated with SGRP *A* in that the programming information may include information relating to one or more subscribers belonging to SGRP *A*. The programming information may include any suitable information (e.g., SGRP node information) that enables the BNG-UP device 210 to handle subscriber traffic associated with the SGRP *A*. In some aspects, the BNG-CP device 205 may transmit, and the BNG-UP device 210 may receive, an indication to refrain from notifying the access network that the logical port is associated with an active state. In some aspects, the indication to refrain from notifying the access network that the logical port is associated with the active state may be a keep-down flag. For example, the BNG-CP device 205 (e.g., the device manager) may transmit, and the BNG-UP device 210 may receive, the subscriber information with the keep-down flag. In some examples, the BNG-CP device 205 may transmit, and the BNG-UP device 210 may receive, a PFCP vendor IE that sets the keep-down flag.

In some aspects, as shown by reference number 260, the indication to refrain from notifying the access network that the logical port is associated with the active state may be associated with a circuit cross-connect (CCC) down flag. The indication to refrain from notifying the access network that the logical port is associated with the active state may be associated with the CCC down flag in that the indication to refrain from notifying the access network that the logical port is associated with the active state may cause the BNG-UP device 210 to set the CCC down flag for the link (e.g., PS1) between the access network and the logical port. The CCC down flag may indicate that a CCC between the access network and the logical port (e.g., a CCC corresponding to PS1) is down. Thus, the CCC down flag may help to ensure that the PS1 between the access network and the logical port does not become active. In some examples, the BNG-UP device 210 may process the keep-down flag and set the CCC down flag based on the keep-down flag. As shown by reference number 265, the BNG-UP device 210 may transmit, and the BNG-CP device 205 may receive, a confirmation that the BNG-UP device 210 received the keep-down flag and/or set the CCC down flag for PS1.

As shown by reference number 270, the device manager on the BNG-CP device 205 may complete subscriber programming. For example, the device manager may start the subscriber programming in response to provide a *port-add-done* indication corresponding to the logical port. For example, the device manager may have completed programming all subscribers for SGRP *A*.

In some aspects, as shown by reference number 275, the BNG-CP device 205 may transmit, and the BNG-UP device 210 may receive, an indication to notify the access network that the logical port is associated with the active state. For example, the BNG-CP device 205 may transmit the indication to notify the access network that the logical port is associated with the active state responsive to the BNG-CP device 205 transmitting the programming information (e.g., all of the programming information) to the BNG-UP device 210. In some aspects, the indication to notify the access network that the logical port is associated with the active state may clear the keep-down flag. For example, the indication may comprise a PFCP vendor IE that clears the keep-down flag. In some examples, the BNG-CP device 205 may transmit the indication responsive to the device manager completing subscriber programming. In some examples, the BNG-CP device 205 may transmit, and the BNG-UP device 210 may receive, SGRP node information for the logical port corresponding to PS1 with the indication to clear the keep-down flag.

As shown by reference number 280, the indication to notify the access network that the logical port is associated with the active state may be associated with a CCC up flag. The indication to notify the access network that the logical port may be associated with the active state may be associated with the CCC up flag in that the indication to notify the access network that the logical port is associated with the active state may cause the BNG-UP device 210 to set the CCC up flag for the link (e.g., PS1) between the access network and the logical port. The CCC up flag may indicate that a CCC between the access network and the logical port (e.g., a CCC corresponding to PS1) is up. Thus, the CCC up flag may enable the PS 1 between the access network and the logical port to become active. In some examples, the BNG-UP device 210 may process the indication to clear the keep-down flag and set the CCC up flag based on the keep-down flag being cleared. The BNG-UP device 210 setting the CCC up flag may initiate switchover of SGRP *A*, created in TLP mode, to the BNG-UP device 210. For example, the BNG-UP device 210 may enter an active state for SGRP *A* (e.g., the BNG-UP device 210 may become the active BNG-UP device for SGRP *A*)*.* For example, the PS1 may switch to active for SGRP *A*. As shown by reference number 285, the BNG-UP device 210 may transmit, and the BNG-CP device 205 may receive, a confirmation that the BNG-UP device 210 cleared the keep-down flag and/or set the CCC up flag for PS1.

In some examples, at any suitable stage in the sequence shown in Fig. 2, a network administrator may input a "show" command into a command line interface (CLI). The "show" command may prompt display of the keep-down state of the logical port at that time. For example, the "show" command may prompt display of an indication of whether the keep-down flag is set or cleared for the logical port.

As indicated above, Fig. 2 is provided as an example. Other examples may differ from what is described with regard to Fig. 2.

Fig. 3 is a diagram of an example environment 300 in which systems and/or methods described herein may be implemented. As shown in Fig. 3, environment 300 may include a network device 310, a first subscriber access network device 320, a second subscriber access network device 330, and a network 340. Devices of environment 300 may interconnect via wired connections, wireless connections, or a combination of wired and wireless connections.

The network device 310 may be a control plane subscriber access device, such as a BNG-CP device, an access gateway function control plane (AGF-CP) device, or the like. The network device 310 may be responsible for managing the first subscriber access network device 320 and the second subscriber access network device 330. For example, the network device 310 may be responsible for transmitting an indication to refrain from notifying an access network that a logical port corresponding to a subscriber group created in a TLP mode is associated with an active state, or the like.

The first subscriber access network device 320 and the second subscriber access network device 330 may be BNG-UP device, access gateway function user plane (AGF-UP) devices, or the like. The first subscriber access network device 320 and the second subscriber access network device 330 may be responsible for routing traffic to or from one or more remote terminals.

The network 340 may include one or more wired and/or wireless networks. For example, the network 340 may include a wireless wide area network (e.g., a cellular network or a public land mobile network), a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks. The network 340 enables communication among the devices of environment 300.

The number and arrangement of devices and networks shown in Fig. 3 are provided as an example. In practice, there may be additional devices and/or networks, fewer devices and/or networks, different devices and/or networks, or differently arranged devices and/or networks than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) of environment 300 may perform one or more functions described as being performed by another set of devices of environment 300.

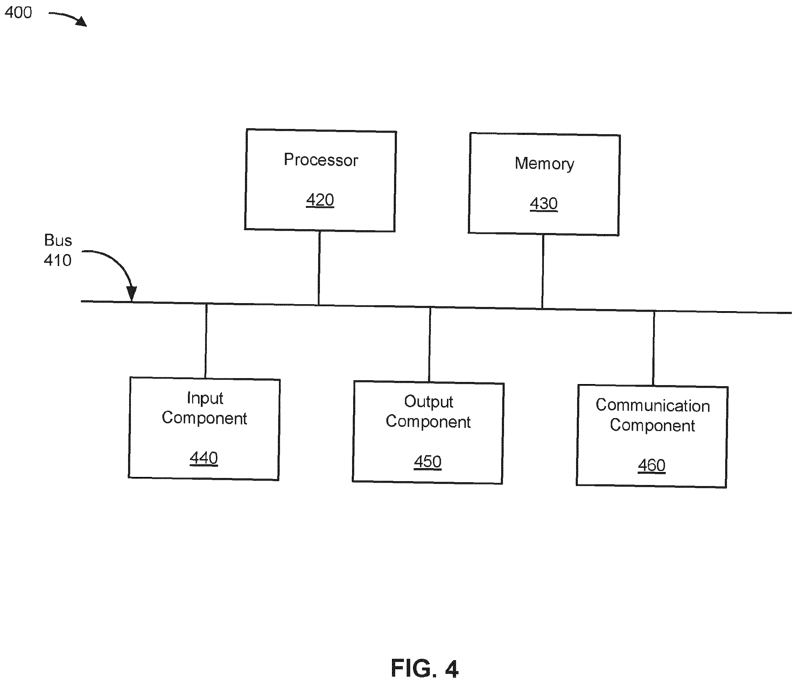

Fig. 4 is a diagram of example components of a device 400 associated with refraining from logical port active state notification. The device 400 may correspond to the network device 310, the first subscriber access network device 320, and/or the second subscriber access network device 330. In some implementations, the network device 310, the first subscriber access network device 320, and/or the second subscriber access network device 330 may include one or more devices 400 and/or one or more components of the device 400. As shown in Fig. 4, the device 400 may include a bus 410, a processor 420, a memory 430, an input component 440, an output component 450, and/or a communication component 460.

The bus 410 may include one or more components that enable wired and/or wireless communication among the components of the device 400. The bus 410 may couple together two or more components of Fig. 4, such as via operative coupling, communicative coupling, electronic coupling, and/or electric coupling. For example, the bus 410 may include an electrical connection (e.g., a wire, a trace, and/or a lead) and/or a wireless bus. The processor 420 may include a central processing unit, a graphics processing unit, a microprocessor, a controller, a microcontroller, a digital signal processor, a field-programmable gate array, an application-specific integrated circuit, and/or another type of processing component. The processor 420 may be implemented in hardware, firmware, or a combination of hardware and software. In some implementations, the processor 420 may include one or more processors capable of being programmed to perform one or more operations or processes described elsewhere herein.

The memory 430 may include volatile and/or nonvolatile memory. For example, the memory 430 may include random access memory (RAM), read only memory (ROM), a hard disk drive, and/or another type of memory (e.g., a flash memory, a magnetic memory, and/or an optical memory). The memory 430 may include internal memory (e.g., RAM, ROM, or a hard disk drive) and/or removable memory (e.g., removable via a universal serial bus connection). The memory 430 may be a non-transitory computer-readable medium. The memory 430 may store information, one or more instructions, and/or software (e.g., one or more software applications) related to the operation of the device 400. In some implementations, the memory 430 may include one or more memories that are coupled (e.g., communicatively coupled) to one or more processors (e.g., processor 420), such as via the bus 410. Communicative coupling between a processor 420 and a memory 430 may enable the processor 420 to read and/or process information stored in the memory 430 and/or to store information in the memory 430.

The input component 440 may enable the device 400 to receive input, such as user input and/or sensed input. For example, the input component 440 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 450 may enable the device 400 to provide output, such as via a display, a speaker, and/or a light-emitting diode. The communication component 460 may enable the device 400 to communicate with other devices via a wired connection and/or a wireless connection. For example, the communication component 460 may include a receiver, a transmitter, a transceiver, a modem, a network interface card, and/or an antenna.

The device 400 may perform one or more operations or processes described herein. For example, a non-transitory computer-readable medium (e.g., memory 430) may store a set of instructions (e.g., one or more instructions or code) for execution by the processor 420. The processor 420 may execute the set of instructions to perform one or more operations or processes described herein. In some implementations, execution of the set of instructions, by one or more processors 420, causes the one or more processors 420 and/or the device 400 to perform one or more operations or processes described herein. In some implementations, hardwired circuitry may be used instead of or in combination with the instructions to perform one or more operations or processes described herein. Additionally, or alternatively, the processor 420 may be configured to perform one or more operations or processes described herein. Thus, implementations described herein are not limited to any specific combination of hardware circuitry and software.

The number and arrangement of components shown in Fig. 4 are provided as an example. The device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

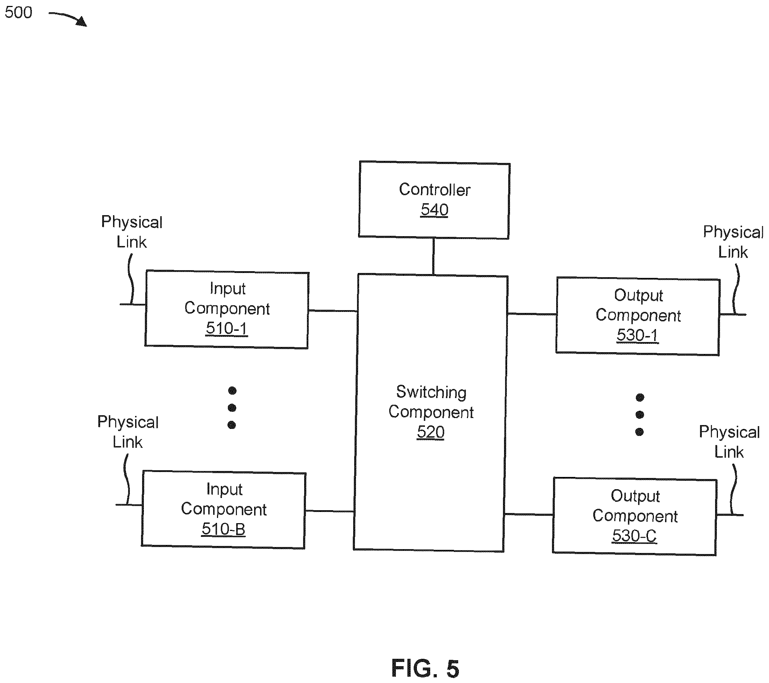

Fig. 5 is a diagram of example components of a device 500 associated with refraining from logical port active state notification. Device 500 may correspond to the network device 310, the first subscriber access network device 320, and/or the second subscriber access network device 330. In some implementations, the network device 310, the first subscriber access network device 320, and/or the second subscriber access network device 330 may include one or more devices 500 and/or one or more components of device 500. As shown in Fig. 5, device 500 may include one or more input components 510-1 through 510-B (B ≥ 1) (hereinafter referred to collectively as input components 510, and individually as input component 510), a switching component 520, one or more output components 530-1 through 530-C (C ≥ 1) (hereinafter referred to collectively as output components 530, and individually as output component 530), and a controller 540.

Input component 510 may be one or more points of attachment for physical links and may be one or more points of entry for incoming traffic, such as packets. Input component 510 may process incoming traffic, such as by performing data link layer encapsulation or decapsulation. In some implementations, input component 510 may transmit and/or receive packets. In some implementations, input component 510 may include an input line card that includes one or more packet processing components (e.g., in the form of integrated circuits), such as one or more interface cards (IFCs), packet forwarding components, line card controller components, input ports, processors, memories, and/or input queues. In some implementations, device 500 may include one or more input components 510.

Switching component 520 may interconnect input components 510 with output components 530. In some implementations, switching component 520 may be implemented via one or more crossbars, via busses, and/or with shared memories. The shared memories may act as temporary buffers to store packets from input components 510 before the packets are eventually scheduled for delivery to output components 530. In some implementations, switching component 520 may enable input components 510, output components 530, and/or controller 540 to communicate with one another.

Output component 530 may store packets and may schedule packets for transmission on output physical links. Output component 530 may support data link layer encapsulation or decapsulation, and/or a variety of higher-level protocols. In some implementations, output component 530 may transmit packets and/or receive packets. In some implementations, output component 530 may include an output line card that includes one or more packet processing components (e.g., in the form of integrated circuits), such as one or more IFCs, packet forwarding components, line card controller components, output ports, processors, memories, and/or output queues. In some implementations, device 500 may include one or more output components 530. In some implementations, input component 510 and output component 530 may be implemented by the same set of components (e.g., and input/output component may be a combination of input component 510 and output component 530).

Controller 540 includes a processor in the form of, for example, a central processing unit (CPU), a graphics processing unit (GPU), an accelerated processing unit (APU), a microprocessor, a microcontroller, a digital signal processor (DSP), an field-programmable gate array (FPGA), an application-specific integrated circuit (ASIC), and/or another type of processor. The processor is implemented in hardware, firmware, or a combination of hardware and software. In some implementations, controller 540 may include one or more processors that can be programmed to perform a function.

In some implementations, controller 540 may include a RAM, a ROM, and/or another type of dynamic or static storage device (e.g., a flash memory, a magnetic memory, an optical memory, etc.) that stores information and/or instructions for use by controller 540.

In some implementations, controller 540 may communicate with other devices, networks, and/or systems connected to device 500 to exchange information regarding network topology. Controller 540 may create routing tables based on the network topology information, may create forwarding tables based on the routing tables, and may forward the forwarding tables to input components 510 and/or output components 530. Input components 510 and/or output components 530 may use the forwarding tables to perform route lookups for incoming and/or outgoing packets.

Controller 540 may perform one or more processes described herein. Controller 540 may perform these processes in response to executing software instructions stored by a non-transitory computer-readable medium. A computer-readable medium is defined herein as a non-transitory memory device. A memory device includes memory space within a single physical storage device or memory space spread across multiple physical storage devices.

Software instructions may be read into a memory and/or storage component associated with controller 540 from another computer-readable medium or from another device via a communication interface. When executed, software instructions stored in a memory and/or storage component associated with controller 540 may cause controller 540 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 5 are provided as an example. In practice, device 500 may include additional components, fewer components, different components, or differently arranged components than those shown in Fig. 5. Additionally, or alternatively, a set of components (e.g., one or more components) of device 500 may perform one or more functions described as being performed by another set of components of device 500.

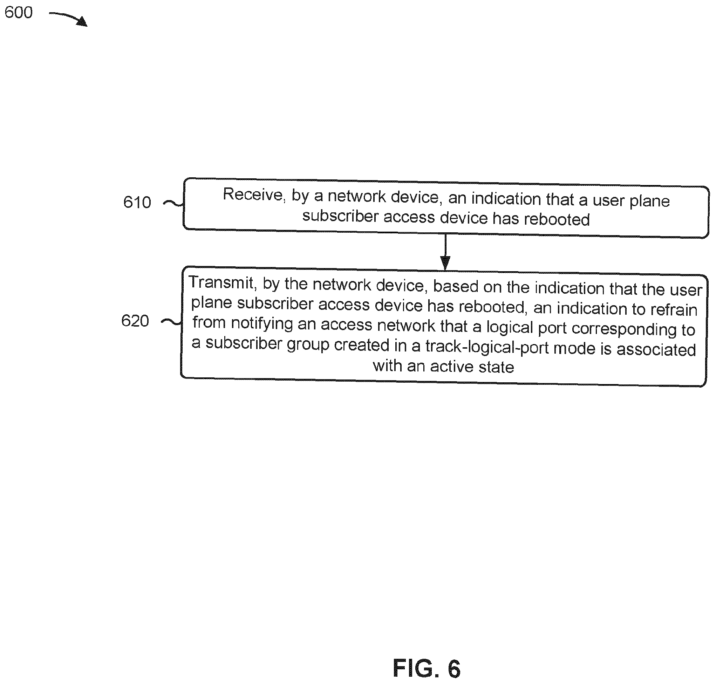

Fig. 6 is a flowchart of an example process 600 associated with refraining from a logical port active state notification. In some implementations, one or more process blocks of Fig. 6 are performed by a network device (e.g., the network device shown in Fig. 1). In some implementations, one or more process blocks of Fig. 6 are performed by another device or a group of devices separate from or including the network device, such as a network device (e.g., network device 310), a first subscriber access network device (e.g., first subscriber access network device 320), and/or a second subscriber access network device (e.g., second subscriber access network device 330). Additionally, or alternatively, one or more process blocks of Fig. 6 may be performed by one or more components of device 400, such as processor 420, memory 430, input component 440, output component 450, and/or communication component 460, and/or device 500, such as input component 510, switching component 520, output component 530, and/or controller 540.

As shown in Fig. 6, process 600 may include receiving an indication that a user plane subscriber access device has rebooted (block 610). For example, the network device may receive an indication that a user plane subscriber access device has rebooted, as described above.

As further shown in Fig. 6, process 600 may include transmitting, based on the indication that the user plane subscriber access device has rebooted, an indication to refrain from notifying an access network that a logical port corresponding to a subscriber group created in a TLP mode is associated with an active state (block 620). For example, the network device may transmit, based on the indication that the user plane subscriber access device has rebooted, an indication to refrain from notifying an access network that a logical port corresponding to a subscriber group created in a TLP mode is associated with an active state, as described above.

Process 600 may include additional implementations, such as any single implementation or any combination of implementations described below and/or in connection with one or more other processes described elsewhere herein.

In a first implementation, the indication to refrain from notifying the access network that the logical port is associated with the active state is a keep-down flag.

In a second implementation, alone or in combination with the first implementation, the indication to refrain from notifying the access network that the logical port is associated with the active state is associated with a CCC down flag.

In a third implementation, alone or in combination with one or more of the first and second implementations, process 600 includes transmitting, by the network device, programming information associated with the subscriber group, and transmitting, by the network device, responsive to transmitting the programming information, an indication to notify the access network that the logical port is associated with the active state.

In a fourth implementation, alone or in combination with one or more of the first through third implementations, the indication to notify the access network that the logical port is associated with the active state clears a keep-down flag.

In a fifth implementation, alone or in combination with one or more of the first through fourth implementations, the indication to notify the access network that the logical port is associated with the active state is associated with a CCC up flag.

In a sixth implementation, alone or in combination with one or more of the first through fifth implementations, process 600 includes receiving, by the network device, an indication that a link between the access network and the logical port is a preferred active link, and transmitting the indication to refrain from notifying the access network that the logical port is associated with the active state includes transmitting the indication to refrain from notifying the access network that the logical port based on the indication that the link associated with the logical port is the preferred active link.

In a seventh implementation, alone or in combination with one or more of the first through sixth implementations, the network device is a BNG-CP device.

Although Fig. 6 shows example blocks of process 600, in some implementations, process 600 includes additional blocks, fewer blocks, different blocks, or differently arranged blocks than those depicted in Fig. 6. Additionally, or alternatively, two or more of the blocks of process 600 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. A packet may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors to: perform X; perform Y; and perform Z," that claim should be interpreted to mean "one or more processors to perform X; one or more (possibly different) processors to perform Y; and one or more (also possibly different) processors to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

Thus, from one perspective, there has now been described a network device that may receive an indication that a user plane subscriber access device has rebooted. The network device may transmit based on the indication that the user plane subscriber access device has rebooted, an indication to refrain from notifying an access network that a logical port corresponding to a subscriber group created in a track-logical-port mode is associated with an active state.

## Claims

1. A method, comprising:
receiving (110), by a network device, an indication that a user plane subscriber access device has rebooted; and
transmitting (120), by the network device and to a first subscriber access network device, based on the indication that the user plane subscriber access device has rebooted, an indication to refrain from notifying an access network that a logical port corresponding to a subscriber group created in a track-logical-port mode is associated with an active state.

2. The method of claim 1, further comprising:
transmitting, by the network device, programming information associated with the subscriber group; and
transmitting, by the network device, responsive to transmitting the programming information, an indication to notify the access network that the logical port is associated with the active state.

3. The method of claim 1 or 2, further comprising:
receiving, by the network device, an indication that a link between the access network and the logical port is a preferred active link, wherein transmitting the indication to refrain from notifying the access network that the logical port is associated with the active state includes transmitting the indication to refrain from notifying the access network that the logical port based on the indication that the link associated with the logical port is the preferred active link.

4. The method of any preceding claim, wherein the network device is a broadband network gateway control plane, BNG-CP, device.

5. A broadband network gateway control plane, BNG-CP, device, comprising:
one or more memories; and
one or more processors to:
receive (110) an indication that a user plane subscriber access device has rebooted; and
transmit (120) to a first subscriber access network device, based on the indication that the user plane subscriber access device has rebooted, an indication to refrain from notifying an access network that a logical port corresponding to a subscriber group created in a track-logical-port mode is associated with an active state.

6. The method of claim 1, or the BNG-CP device of claim 5, wherein the indication to refrain from notifying the access network that the logical port is associated with the active state is a keep-down flag.

7. The method of claim 1, or the BNG-CP device of claim 5 or 6, wherein the indication to refrain from notifying the access network that the logical port is associated with the active state is associated with a circuit cross-connect, CCC, down flag.

8. The BNG-CP device of any of claims 5 to 7, wherein the one or more processors are further to:
transmit programming information associated with the subscriber group; and
transmit, responsive to transmitting the programming information, an indication to notify the access network that the logical port is associated with the active state.

9. The method of claim 2, or the BNG-CP device of claim 8, wherein the indication to notify the access network that the logical port is associated with the active state clears a keep-down flag.

10. A computer-readable medium comprising computer-implementable instructions that, when executed by one or more processors of a network device, cause the network device to:
receive (110) an indication that a user plane subscriber access device has rebooted; and
transmit (120) to a first subscriber access network device, based on the indication that the user plane subscriber access device has rebooted, a keep-down flag that indicates to refrain from notifying an access network that a logical port corresponding to a subscriber group created in a track-logical-port mode is associated with an active state.

11. The computer-readable medium of claim 10, wherein the keep-down flag is associated with a circuit cross-connect, CCC, down flag.

12. The computer-readable medium of claim 10 or 11, wherein the one or more instructions further cause the network device to:
transmit programming information associated with the subscriber group; and
transmit responsive to transmitting the programming information, an indication to notify the access network that the logical port is associated with the active state.

13. The computer-readable medium of claim 12, wherein the indication to notify the access network that the logical port is associated with the active state clears the keep-down flag.

14. The method of claim 2, or the BNG-CP device of claim 8 or 9, or the computer-readable medium of claim 12 or 13, wherein the indication to notify the access network that the logical port is associated with the active state is associated with a circuit cross-connect, CCC, up flag.

15. The computer-readable medium of any of claims 10 to 14, wherein the network device is a broadband network gateway control plane, BNG-CP, device.

## Patentansprüche

1. Verfahren, umfassend:
Empfangen (110), durch eine Netzwerkvorrichtung, einer Angabe, dass eine Teilnehmerzugangsvorrichtung der Nutzerebene neu gestartet wurde; und
Übertragen (120), durch die Netzwerkvorrichtung und an eine erste Teilnehmerzugangsnetzwerkvorrichtung, basierend auf der Angabe, dass die Teilnehmerzugangsvorrichtung der Nutzebene neu gestartet wurde, einer Angabe, um davon abzusehen, einem Zugangsnetzwerk mitzuteilen, dass ein logischer Port, der einer im Modus zur Verfolgung des logischen Ports erstellten Teilnehmergruppe entspricht, einem aktiven Zustand zugeordnet ist.

2. Verfahren nach Anspruch 1, weiter umfassend:
Übertragen, durch die Netzwerkvorrichtung, von Programmierinformationen, die der Teilnehmergruppe zugeordnet sind; und
Übertragen, durch die Netzwerkvorrichtung, als Reaktion auf das Übertragen der Programmierinformationen, einer Angabe, um das Zugangsnetz darüber zu benachrichtigen, dass der logische Port dem aktiven Zustand zugeordnet ist.

3. Verfahren nach Anspruch 1 oder 2, weiter umfassend:
Empfangen, durch die Netzwerkvorrichtung, einer Angabe, dass eine Verbindung zwischen dem Zugangsnetzwerk und dem logischen Port eine bevorzugte aktive Verbindung ist, wobei das Übertragen der Angabe, um davon abzusehen, dem Zugangsnetzwerk mitzuteilen, dass der logische Port dem aktiven Zustand zugeordnet ist, das Übertragen der Angabe einschließt, um davon abzusehen, dem Zugangsnetzwerk mitzuteilen, dass der logische Port basierend auf der Angabe, dass die dem logischen Port zugeordnete Verbindung die bevorzugte aktive Verbindung ist.

4. Verfahren nach einem vorstehenden Anspruch, wobei die Netzwerkvorrichtung eine Breitband-Netzwerk-Gateway-Steuerungsebenenvorrichtung, BNG-CP-Vorrichtung, ist.

5. Breitband-Netzwerk-Gateway-Steuerungsebenenvorrichtung, BNG-CP-Vorrichtung, umfassend:
einen oder mehrere Speicher; und
einen oder mehrere Prozessoren zum:
Empfangen (110) einer Angabe, dass eine Teilnehmerzugangsvorrichtung der Nutzerebene neu gestartet wurde; und
Übertragen (120) an eine erste Teilnehmerzugangsnetzwerkvorrichtung, basierend auf der Angabe, dass die Teilnehmerzugangsvorrichtung der Nutzebene neu gestartet wurde, einer Angabe, um davon abzusehen, einem Zugangsnetzwerk mitzuteilen, dass ein logischer Port, der einer im Modus zur Verfolgung des logischen Ports erstellten Teilnehmergruppe entspricht, einem aktiven Zustand zugeordnet ist.

6. Verfahren nach Anspruch 1 oder BNG-CP-Vorrichtung nach Anspruch 5, wobei die Angabe, um davon abzusehen, dem Zugangsnetzwerk mitzuteilen, dass der logische Port dem aktiven Zustand zugeordnet ist, ein Keep-Down-Flag ist.

7. Verfahren nach Anspruch 1 oder BNG-CP-Vorrichtung nach Anspruch 5 oder 6, wobei die Angabe, um davon abzusehen, dem Zugangsnetzwerk mitzuteilen, dass der logische Port dem aktiven Zustand zugeordnet ist, dem Down-Flag einer Schaltungsquerverbindung, CCC, zugeordnet ist.

8. BNG-CP-Vorrichtung nach einem der Ansprüche 5 bis 7, wobei der eine oder die mehreren Prozessoren weiter dienen zum:
Übertragen von Programminformationen, die der Teilnehmergruppe zugeordnet sind; und
Übertragen, als Reaktion auf das Übertragen der Programmierinformationen, einer Angabe, um das Zugangsnetz darüber zu benachrichtigen, dass der logische Port dem aktiven Zustand zugeordnet ist.

9. Verfahren nach Anspruch 2 oder BNG-CP-Vorrichtung nach Anspruch 8, wobei die Angabe, um dem Zugangsnetzwerk mitzuteilen, dass der logische Port dem aktiven Zustand zugeordnet ist, ein Keep-Down-Flag löscht.

10. Computerlesbares Medium, das computerimplementierbare Anweisungen umfasst, die, wenn sie von einem oder mehreren Prozessoren einer Netzwerkvorrichtung ausgeführt werden, die Netzwerkvorrichtung veranlassen zum:
Empfangen (110) einer Angabe, dass eine Teilnehmerzugangsvorrichtung der Nutzerebene neu gestartet wurde; und
Übertragen (120) an eine erste Teilnehmerzugangsnetzwerkvorrichtung, basierend auf der Angabe, dass die Teilnehmerzugangsvorrichtung der Nutzerebene neu gestartet wurde, eines Keep-Down-Flags, das anzeigt, dass davon abgesehen werden soll, einem Zugangsnetzwerk mitzuteilen, dass ein logischer Port, der einer im Modus zur Verfolgung des logischen Ports erstellten Teilnehmergruppe entspricht, einem aktiven Zustand zugeordnet ist.

11. Computerlesbares Medium nach Anspruch 10, wobei das Keep-Down-Flag einem Down-Flag der Schaltungsquerverbindung, CCC, zugeordnet ist.

12. Computerlesbares Medium nach Anspruch 10 oder 11, wobei die eine oder mehreren Anweisungen die Netzwerkvorrichtung weiter veranlassen zum:
Übertragen von Programminformationen, die der Teilnehmergruppe zugeordnet sind; und
Übertragen, als Reaktion auf das Übertragen der Programmierinformationen, einer Angabe, um das Zugangsnetzwerk darüber zu benachrichtigen, dass der logische Port dem aktiven Zustand zugeordnet ist.

13. Computerlesbares Medium nach Anspruch 12, wobei die Angabe, um dem Zugangsnetzwerk mitzuteilen, dass der logische Port dem aktiven Zustand zugeordnet ist, ein Keep-Down-Flag löscht.

14. Verfahren nach Anspruch 2 oder BNG-CP-Vorrichtung nach Anspruch 8 oder 9 oder computerlesbares Medium nach Anspruch 12 oder 13, wobei die Angabe, um dem Zugangsnetzwerk mitzuteilen, dass der logische Port dem aktiven Zustand zugeordnet ist, einem Up-Flag einer Schaltungsquerverbindung, CCC, zugeordnet ist.

15. Computerlesbares Medium nach einem der Ansprüche 10 bis 14, wobei die Netzwerkvorrichtung eine Breitband-Netzwerk-Gateway-Steuerungsebenenvorrichtung, BNG-CP-Vorrichtung, ist.

## Revendications

1. Procédé, comprenant :
la réception (110), par un dispositif de réseau, d'une indication selon laquelle un dispositif d'accès d'abonné de plan utilisateur a redémarré ; et
la transmission (120), par le dispositif de réseau et à un premier dispositif de réseau d'accès d'abonné, sur la base de l'indication selon laquelle le dispositif d'accès d'abonné de plan utilisateur a redémarré, d'une indication de s'abstenir de notifier à un réseau d'accès qu'un port logique correspondant à un groupe d'abonnés créé en mode de suivi de port logique est associé à un état actif.

2. Procédé selon la revendication 1, comprenant en outre :
la transmission, par le dispositif de réseau, d'informations de programmation associées au groupe d'abonnés ; et
la transmission, par le dispositif de réseau, en réponse à la transmission des informations de programmation, d'une indication pour notifier au réseau d'accès que le port logique est associé à l'état actif.

3. Procédé selon la revendication 1 ou 2, comprenant en outre :
la réception, par le dispositif de réseau, d'une indication selon laquelle une liaison entre le réseau d'accès et le port logique est une liaison active préférée, dans lequel la transmission de l'indication de s'abstenir de notifier au réseau d'accès que le port logique est associé à l'état actif inclut la transmission de l'indication de s'abstenir de notifier au réseau d'accès que le port logique est basé sur l'indication selon laquelle la liaison associée au port logique est la liaison active préférée.

4. Procédé selon une quelconque revendication précédente, dans lequel le dispositif de réseau est un dispositif de plan de contrôle de passerelle de réseau à large bande, BNG-CP.

5. Dispositif de plan de contrôle de passerelle de réseau à large bande (BNG-CP) comprenant :
une ou plusieurs mémoires ; et
un ou plusieurs processeurs pour :
recevoir (110) une indication selon laquelle un dispositif d'accès d'abonné de plan utilisateur a redémarré ; et
transmettre (120) à un premier dispositif de réseau d'accès d'abonné, sur la base de l'indication selon laquelle le dispositif d'accès d'abonné de plan utilisateur a redémarré, une indication de s'abstenir de notifier à un réseau d'accès qu'un port logique correspondant à un groupe d'abonnés créé en mode de suivi de port logique est associé à un état actif.

6. Procédé selon la revendication 1, ou dispositif BNG-CP selon la revendication 5, dans lequel l'indication de s'abstenir de notifier au réseau d'accès que le port logique est associé à l'état actif est un indicateur de maintien au niveau bas.

7. Procédé selon la revendication 1, ou dispositif BNG-CP selon la revendication 5 ou 6, dans lequel l'indication de s'abstenir de notifier au réseau d'accès que le port logique est associé à l'état actif est associée à un indicateur d'interconnexion de circuits, CCC, au niveau bas.

8. Dispositif BNG-CP selon l'une quelconque des revendications 5 à 7, dans lequel les un ou plusieurs processeurs sont en outre aptes à :
transmettre des informations de programmation associées au groupe d'abonnés ; et
transmettre, en réponse à la transmission des informations de programmation, une indication pour notifier au réseau d'accès que le port logique est associé à l'état actif.

9. Procédé selon la revendication 2, ou dispositif BNG-CP selon la revendication 8, dans lequel l'indication pour notifier au réseau d'accès que le port logique est associé à l'état actif efface un indicateur de maintien au niveau bas.

10. Support lisible par ordinateur comprenant des instructions exécutables par ordinateur qui, lorsqu'elles sont exécutées par un ou plusieurs processeurs d'un dispositif de réseau, amènent le dispositif de réseau à :
recevoir (110) une indication selon laquelle un dispositif d'accès d'abonné de plan utilisateur a redémarré ; et
transmettre (120) à un premier dispositif de réseau d'accès d'abonné, sur la base de l'indication selon laquelle le dispositif d'accès d'abonné de plan utilisateur a redémarré, un indicateur de maintien au niveau bas qui indique de s'abstenir de notifier à un réseau d'accès qu'un port logique correspondant à un groupe d'abonnés créé en mode de suivi de port logique est associé à un état actif.

11. Support lisible par ordinateur selon la revendication 10, dans lequel l'indicateur de maintien au niveau bas est associé à un indicateur d'interconnexion de circuits, CCC, au niveau bas.

12. Support lisible par ordinateur selon la revendication 10 ou 11, dans lequel les une ou plusieurs instructions amènent en outre le dispositif de réseau à :
transmettre des informations de programmation associées au groupe d'abonnés ; et
transmettre, en réponse à la transmission des informations de programmation, une indication pour notifier au réseau d'accès que le port logique est associé à l'état actif.

13. Support lisible par ordinateur selon la revendication 12, dans lequel l'indication pour notifier au réseau d'accès que le port logique est associé à l'état actif efface l'indicateur de maintien au niveau bas.

14. Procédé selon la revendication 2, ou dispositif BNG-CP selon la revendication 8 ou 9, ou support lisible par ordinateur selon la revendication 12 ou 13, dans lequel l'indication pour notifier au réseau d'accès que le port logique est associé à l'état actif est associée à un indicateur d'interconnexion de circuits, CCC, au niveau haut.

15. Support lisible par ordinateur selon l'une quelconque des revendications 10 à 14, dans lequel le dispositif de réseau est un dispositif de plan de contrôle de passerelle de réseau à large bande, BNG-CP.
